Europäisches Patentamt

(19) European Patent Office

Office européen des brevets

(11) Numéro de publication: **0 351 310**
**A2**

(12) # DEMANDE DE BREVET EUROPEEN

(21) Numéro de dépôt: **89401991.8**

(22) Date de dépôt: **11.07.89**

(51) Int. Cl.⁵: **A 01 K 1/00**

(30) Priorité: **13.07.88 FR 8809526**

(43) Date de publication de la demande:
**17.01.90 Bulletin 90/03**

(84) Etats contractants désignés: **ES FR IT**

(71) Demandeur: **SEETRAME**
**L'Onglée Saint-Aubain du Plain**
**F-79300 Bressuire (FR)**

(72) Inventeur: **Erisse, Emile**
**L'Onglée Saint-Aubain du Plain**
**F-79300 Bressuire (FR)**

**Almé, Bruno**
**40 rue Henri Dunant**
**F-86000 Poitiers (FR)**

(74) Mandataire: **Polus, Camille et al**
**c/o Cabinet Lavoix 2, Place d'Estienne d'Orves**
**F-75441 Paris Cedex 09 (FR)**

(54) **Equipment de ventilation d'un local d'élevage et local ainsi équipé.**

(57) L'invention concerne un local d'élevage, qui comporte un sol (1), deux parois latérales (2) et un toit (4), un premier ventilateur de brassage (8) placé sous le toit (4), approximativement au milieu de la distance qui sépare les deux parois latérales (2), au moins un premier déflecteur (7) placé sous le toit (4) perpendiculairement au sens dans lequel l'air est propulsé par ledit premier ventilateur (8) et un premier ventilateur d'extraction (6) placé dans le toit (4), approximativement au centre de ce dernier, ledit ventilateur d'extraction (6), lorsqu'il est en fonctionnement, aspirant de l'air à l'intérieur du local pour l'éjecter hors de celui-ci.

FIG. 1

## Description

## EQUIPMENT DE VENTILATION D'UN LOCAL D'ELEVAGE ET LOCAL AINSI EQUIPE

La présente invention, réalisée en liaison avec les travaux effectués par Monsieur AIME au sein du CRITT ENERGETIQUE - REGION POITOU-CHARENTES, concerne l'équipement d'un local d élevage, notamment d'élevage de volailles, et plus particulièrement de poules, comportant un système de ventilation destiné à gérer le brassage et le renouvellement de l'air dans le local.

On a depuis longtemps, et surtout depuis l'apparition d'unités d'élevage industrielles, cherché à résoudre les problèmes de ventilation et d'aération des locaux d'élevage, notamment de porcheries et de poulaillers, ou d'étables.

Un grand nombre de solutions ont été déjà proposées, mais ces solutions, si elles permettent une bonne ventilation du local d'élevage lorsque l'on n'a pas besoin de se préoccuper de la température de l'air entrant, sont inadaptées lorsque la température extérieure est inférieure à la température qu'il est nécessaire de maintenir dans le local d'élevage. C'est le cas notamment des périodes hivernales, et de périodes de croissance des animaux qui nécessitent des températures plus élevées; c'est le cas par exemple des périodes de croissance des poussins qui nécessitent des températures de 30 à 32°C.

Lorsqu'il est nécessaire de maintenir l'intérieur du local à une température supérieure à la température de l'air extérieur, une première solution consiste à chauffer le local, par exemple par des radiateurs, tout en A maintenant la ventilation à un même niveau de débit d'air. Si cette solution permet d'allier ventilation et chaleur, elle est extrêmement coûteuse par les dépenses d'énergie dues au chauffage du local.

Une seconde solution consiste à fermer les issues du local afin de retenir la chaleur engendrée par les animaux. Cette seconde solution, si elle permet d'éviter d'avoir à chauffer le local par des moyens coûteux, empêche un renouvellement de l'air dans le local, ce qui a pour conséquence que les animaux meurent par étouffement dû à un manque d'oxygène.

De plus, que ce soit en période estivale ou en période hivernale, l'air est reparti inégalement dans l'intérieur du local ce qui, notamment dans le cas d'un poulailler où la disposition des cages constitue un obstacle au passage de l'air, a pour conséquence une mauvaise ventilation de certaines parties du local et ainsi des risques de mort par étouffement des poules ou des volailles.

La présente invention vise à équiper un local d'élevage, notamment un poulailler, afin de maintenir en permanence une circulation d'air dans toutes les parties du local et spécialement au niveau des animaux, et d'y maintenir a température désirée à moindre coût pour une exploitation optimale de toute chaleur disponible tout en permettant une bonne oxygénation de l'air circulant dans le local grâce à une inversion du sens de circulation entre les conditions hivernales et estivales.

Selon sa caractéristique principale, l'invention concerne un équipement de local d'élevage ,notamment destiné à l'élevage de poules, comportant un sol, deux parois latérales et un toit ,caractérisé en ce qu'il comporte:
- au moins un premier ventilateur de brassage placé sous le toit, approximativement au milieu de la distance qui sépare les deux parois latérales, ledit ventilateur aspirant en fonctionnement de l'air venant du sol du local pour le propulser latéralement approximativement horizontalement parallèlement au toit;
- au moins un premier déflecteur placé sous le toit perpendiculairement au sens dans lequel l'air est propulsé par ledit premier ventilateur lors de son fonctionnement, de manière à dévier une partie de l'air vers le sol du local;
- et un premier ventilateur d'extraction placé dans le toit, approximativement au centre de ce dernier, ledit ventilateur d'extraction, lorsqu'il est en fonctionnement, aspirant de l'air à l'intérieur du local pour l'éjecter hors de celui-ci.

Selon d'autres caractéristiques de l'invention, le local comporte avantageusement:
- un orifice de prélèvement, de préférence placé en toit, et dont le conduit débouche sous le ventilateur de brassage;
- et dans chaque paroi latérale, au moins une ouverture susceptible d'être fermée par un clapet.

Lorsque la température à l'intérieur du local n'a pas besoin d'être supérieure à la température de l'air extérieur, lesdits clapets sont en position ouverte et le ventilateur d'extraction est en fonctionnement, ce qui permet d'accroître le débit d'air qui circule dans le local. En mettant le ventilateur de brassage en fonctionnement, on peut obtenir une meilleure répartition de l'air circulant dans le local.

Lorsqu'il est nécessaire que la température à l'intérieur du local soit supérieure à la température de l'air extérieur, les ouvertures des parois latérales sont fermées par leurs clapets respectifs. Le ventilateur de brassage est en fonctionnement, et il aspire non seulement de l'air venant du sol du local, mais également une petite quantité d'air venant de l'extérieur par la cheminée. Cette petite quantité d'air permet de renouveler l'oxygène contenu dans le local, et du fait de l'emploi d'un ventilateur de brassage et des déflecteurs permettant de répartir l'air dans tout le local, la quantité d'air à prélever à l'extérieur du local peut être faible et ainsi ne pas refroidir sensiblement la température à l'intérieur du local d'élevage.

Afin d'améliorer la circulation de l'air, l'ouverture est avantageusement située dans le haut de chaque parois et le local comporte avantageusement, devant chaque parois, un écran vertical parallèle à celle-ci ; ladite plaque part du toit pour s'arrêter à une distance du sol permettant, lorsque les clapets sont ouverts, le passage de l'air. Selon une autre caractéristique, les ouvertures s'étendent tout le long de chaque parois latérale.

Selon la taille du local à ventiler, celui-ci peut comporter au moins un deuxième déflecteur parallèle au premier déflecteur; ceci permet de mieux repartir dans le local l'air propulsé par le ventilateur de brassage lors de son fonctionnement. De plus, le local peut être équipé de plusieurs ventilateurs de brassage; dans ce cas il est particulièrement avantageux de prévoir un conduit de prélèvement débouchant sous chaque ventilateur de brassage.

On décrira maintenant plus en détail une forme de réalisation particulière de l'invention qui en fera mieux comprendre les caractéristiques essentielles et les avantages, étant entendu toutefois que cette forme de réalisation est choisie à titre d'exemple et qu'elle n'est nullement limitative. Sa description est illustrée par les dessins annexés, dans lesquels :

- la figure 1 représente en perspective et en coupe partielle , un local d'élevage, selon l'invention, lorsque la température souhaitée à l'intérieur du local est à peu près équivalente à la température de l'air extérieur à celui-ci;

- et la figure 2 représente ce même local lorsque la température à l'intérieur de celui-ci doit être supérieure à la température de l'air à l'extérieur du local.

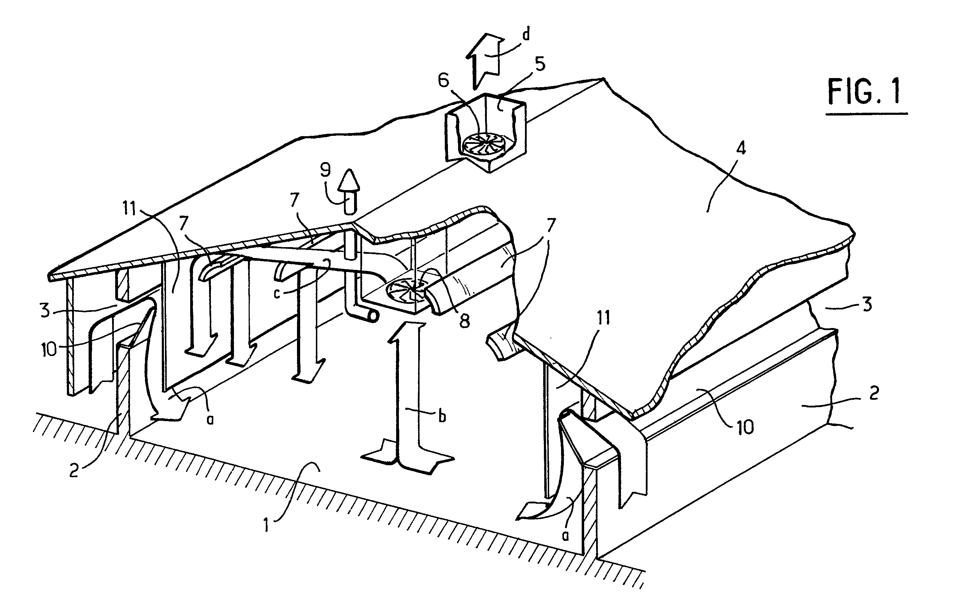

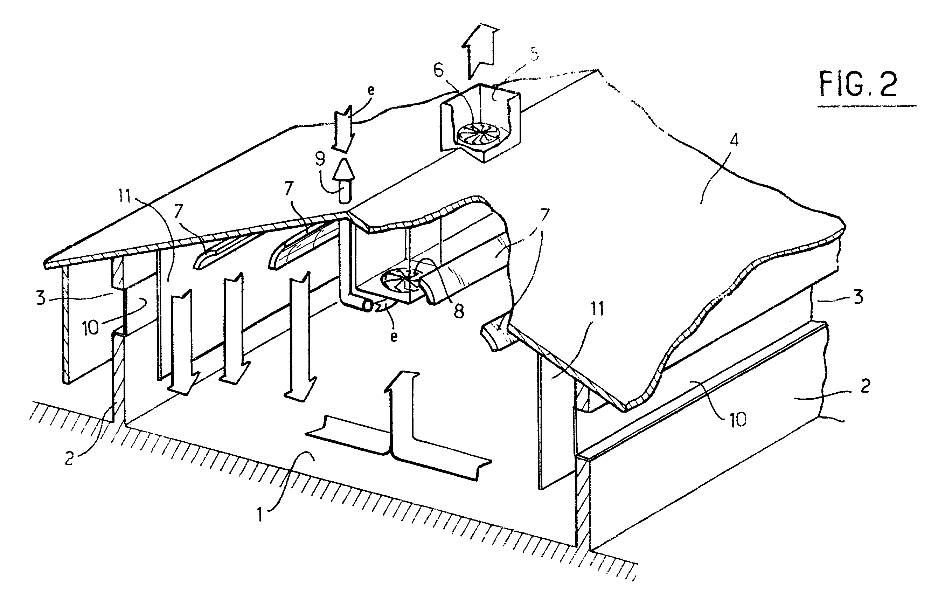

Le local représenté aux figures 1 et 2 est construit sur un sol 1, qui peut être directement la terre ou tout type de plancher. Il comprend deux parois latérales 2, munies chacune d'une ouverture 3, qui s'étend tout le long de la paroi et qui est placée en partie haute de celle-ci. Le local est recouvert par un toit à deux pentes 4, au faîtage duquel se trouve une cheminée 5 dans laquelle est placé un ventilateur d'extraction 6. Des déflecteurs 7, sont suspendus au toit 4 et réparties en deux groupes, respectivement de chaque côté du faîtage. Ces déflecteurs 7 présentent chacun une partie supérieure plane et une partie inférieure courbe. Ils sont placés à une distance du toit qui permet la circulation de l'air entre le déflecteur 7 et le toit 4. Ils sont au nombre de deux dans l'exemple représenté. Bien que cela n'apparaisse pas clairement sur la figure, il convient de souligner que la distance entre le toit et chaque réflecteur varie suivant l'endroit où il se situe par rapport à la pente du toit. Chaque réflecteur inférieur est plus proche du toit que le réflecteur supérieur précédent, tout en restant parallèle au toit dans sa partie plane pour diviser correctement les vecteurs d'air et les orienter vers les zones de passage d'air vers le sol qui sont ménagées entre leurs parties courbes.

Au dessous du faîtage du toit 4, et à une faible distance de celui-ci, est placé un ventilateur de brassage 8 qui, lorsqu'il est en fonctionnement, aspire de l'air depuis le sol du local pour le propulser vers chaque rangée de déflecteurs 7.

Un conduit de prélèvement d'air 9, partant du toit 4 débouche sous le ventilateur 8, face à sa zone d'aspiration, ce qui permet de faire aspirer directement par le ventilateur de brassage 8, de l'air provenant de l'extérieur.

Les ouvertures 3 des parois latérales 2 sont susceptibles d'être fermées par des clapets 10. Ces clapets contribuent à déterminer le mode de fonctionnement du système de ventilation du local.

Les figures 1 et 2 diffèrent par le mode de fonctionnement du système de ventilation, c'est-à-dire par la circulation de l'air à l'intérieur du local. Cette circulation a été schématisée sur les figures par des flèches.

A la figure 1, les clapets 10 des ouvertures 3 sont ouverts, l'air extérieur au local peut donc rentrer dans ce dernier. Afin de favoriser la circulation de l'air le long des litières placées au sol, sur toute la surface du local, un écran 11 est placé devant chaque paroi 10. Chaque écran part du toit pour s'arrêter à une distance du sol 1 permettant, lorsque les clapets sont ouverts, le passage de l'air comme le montrent les flèches a. Cette disposition permet de renouveler fortement l'atmosphère émanant de la litière par de l'air neuf, notamment pour toute la période des chaleurs estivales.

Le ventilateur de brassage 8 aspire l'air comme le montre la flèche b et le propulse vers les rangées de déflecteurs 7, qui le répartissent dans tout le local en le renvoyant vers le sol de celui-ci, comme l'indique la flèche c.

Le ventilateur d extraction 6 éjecte vers l'extérieur du local, comme le montre la flèche d, une quantité d'air relativement importante, qui est identique à la quantité d'air entrant dans le local par les ouvertures 3. La quantité d'air renouvelée dans ce cas est maximum.

A la figure 2 la circulation d'air représentée par les flèches correspond à une circulation qui est presque en circuit fermé. Les ouvertures 3 sont fermées par les clapets 10, le ventilateur de brassage 8 aspire l'air venant du sol 1 du local et le propulse vers les déflecteurs 7 de la même manière et dans le cas représenté à la figure 1, mais il aspire de plus une petite quantité d'air par le conduit de prélèvement 9, comme le montrent les flèches e, ce qui permet de réoxygéner l'air qui circule dans le local.

Le ventilateur d'extraction 6 fonctionne dans ce cas avec un débit bien moindre, de manière à ce que la température à l'intérieur du local ne soit que faiblement influencée par cette circulation d'air. On peut ainsi, sans qu'il soit nécessaire d'adjoindre des moyens de chauffage importants, maintenir une ventilation ayant simplement pour but de renouveler l'oxygène dans le local en récupérant la chaleur s'accumulant en hauteur.

La solution ci-dessus est utilisée en période hivernale. Pendant les périodes de température intermédiaire, le réglage combiné des clapets 10 et de trappes fermant les conduits 9 permet d'obtenir en toutes saisons, les températures et les taux de renouvellement d'air appropriés à une bonne croissance des animaux.

Dans une autre forme de réalisation du local selon l'invention, celui-ci peut comporter plusieurs ventilateurs de brassage; chaque ventilateur de brassage est alors de préférence associé à un conduit de prélèvement d'air. Le local peut également comporter des moyens de chauffage destinés à être actionnés lorsque la chaleur dégagée par les animaux n'est pas suffisantes pour porter le local à la température souhaitée.

Dans tous les cas, l'équipement qui a été décrit peut être incorporé à la construction d'un local neuf ou être mis en place par modification d'un local existant.

Naturellement, l'invention n'est en rien limitée par les particularités qui ont été spécifiées dans ce qui précède ou par les détails du mode de réalisation particulier choisi pour illustrer l'invention. Toutes sortes de variantes peuvent être apportées à la réalisation particulière qui a été décrite à titre d'exemple et à ses éléments constitutifs sans sortir pour autant du cadre de l'invention. Cette dernière englobe ainsi tous les moyens constituant des équivalents techniques des moyens décrits ainsi que leurs combinaisons.

**Revendications**

1. Equipement de local d'élevage, comportant un sol (1), deux parois latérales (2) et un toit (4) caractérisé en ce qu'il comporte au moins :
- un premier ventilateur de brassage (8) placé sous le toit (4), approximativement au milieu de la distance qui sépare les deux parois latérales (2), ledit ventilateur (8) aspirant en fonctionnement aspire de l'air venant du sol (1) du local pour le propulser latéralement, approximativement parallèlement au toit (4);
- au moins un premier déflecteur (7) placé sous le toit (4) perpendiculairement au sens dans lequel l'air est propulsé par ledit premier ventilateur (8), lors de son fonctionnement de manière à dévier une partie de l'air vers le sol (1) du local;
- et un premier ventilateur d'extraction (6) placé dans le toit (4), approximativement au centre de ce dernier, ledit ventilateur d'extraction (6), lorsqu'il est en fonctionnement, aspirant de l'air à l'intérieur du local pour l'éjecter hors de celui-ci.

2. Equipement de local d'élevage selon la revendication 1, caractérisé en ce qu'il comporte, de préférence un toit, un orifice de prélèvement sur un conduit (9) débouchant sous ledit ventilateur de brassage(8).

3. Equipement de local d'élevage selon l'une des revendications 1 ou 2, caractérisé en ce qu'il comporte dans chaque paroi latérale (2), au moins une ouverture (3) susceptible d'être fermée par un clapet (10).

4. Equipement de local d'élevage selon la revendication 3, caractérisé en ce que ladite ouverture (3) est située dans le haut de chaque paroi (2) et en ce que le local comporte intérieurement, devant chaque paroi (2), un écran vertical (11) parallèle à celle-ci, ledit écran (11) partant du toit (4) pour s'arrêter à une distance du sol (1) permettant le passage de l'air, lorsque les clapets (10) sont ouverts.

5. Equipement de local d'élevage selon l'une des revendications 3 ou 4, caractérisé en ce que lesdites ouvertures (3) s'étendent tout le long de chaque paroi latérale (2).

6. Local selon l'une quelconque des revendications précédentes, caractérisé en ce qu'il comporte au moins un deuxième déflecteur (7) parallèle audit premier, de manière à dévier vers le sol du local une partie de l'air propulsé lors de son fonctionnement par ledit ventilateur de brassage (8).

7. Equipement de local d'élevage selon la revendication 7, caractérisé en ce que chaque déflecteur comporte une partie plane parallèle au toit et une partie courbe et en ce qu'un déflecteur inférieur est plus proche du toit qu'un déflecteur supérieur précédent.

8. Equipement de local d'élevage selon l'une quelconque des revendications précédentes, caractérisé en ce qu'il comporte au moins deux ventilateurs de brassage, placés sous le toit approximativement au milieu de la distance séparant les deux parois latérales (2) et chacun à une distance identique du ventilateur d'extraction (6), et au moins deux orifices de prélèvement en toit, débouchant chacun sous l'un des deux ventilateurs de brassage.

9. Local d'élevage équipé conformément à l'une quelconque des revendications précédentes.

FIG. 1

FIG.2

EP 0 351 310 A2